(19) **Europäisches Patentamt / European Patent Office / Office européen des brevets**

(11) **EP 1 495 609 B1**

(12) # EUROPEAN PATENT SPECIFICATION

(45) Date of publication and mention
of the grant of the patent:
**30.09.2009 Bulletin 2009/40**

(21) Application number: **03717312.7**

(22) Date of filing: **17.04.2003**

(51) Int Cl.:
**H04L 27/26** (2006.01)

(86) International application number:
**PCT/EP2003/004091**

(87) International publication number:
**WO 2003/088608 (23.10.2003 Gazette 2003/43)**

(54) **METHOD FOR RETRIEVING INFORMATION TRANSMITTED WITH A SIGNAL OVER A SIGNAL CHANNEL AND CORRESPONDING SIGNAL PROCESSING APPARATUS**

VERFAHREN ZUM ABRUFEN VON INFORMATIONEN; DIE MIT EINEM SIGNAL ÜBER EINEN SIGNALKANAL GESENDET WERDEN, UND ENTSPRECHENDE SIGNALVERARBEITUNGSVORRICHTUNG

PROCEDE D'EXTRACTION DE DONNEES TRANSMISES PAR UN SIGNAL DANS UNE VOIE DE SIGNALISATION ET APPAREIL DE TRAITEMENT DE SIGNAUX CORRESPONDANT

(84) Designated Contracting States:
**DE FR GB IT**

(30) Priority: **17.04.2002 US 373564 P**

(43) Date of publication of application:
**12.01.2005 Bulletin 2005/02**

(73) Proprietor: **Infineon Technologies AG**
**85579 Neubiberg (DE)**

(72) Inventors:
• **YANG, Yan**
**Littleton, MA 01460 (US)**
• **STORN, Rainer**
**85551 Kirchheim (DE)**

• **LUND, Michael**
**West Newton, MA 02465 (US)**
• **FRENZEL, Rudi**
**81737 München (DE)**

(74) Representative: **Banzer, Hans-Jörg et al**
**Kraus & Weisert**
**Patent- und Rechtsanwälte**
**Thomas-Wimmer-Ring 15**
**80539 München (DE)**

(56) References cited:
**EP-A- 1 324 557          WO-A-02/13405**
**US-A1- 2002 041 565      US-B1- 6 205 410**

**Description**

The present invention relates to a method for retrieving information transmitted with a signal, in particular a communication signal, over a signal channel, in particular a communication channel of a communication network, especially a fixed-line or wired communication network. Furthermore, the present invention relates to such a method, whereby it is possible to retrieve or recover the information transmitted with the signal by taking into account noise caused by a further signal, which is transmitted over the same signal channel but in a different frequency range. For example, the present invention may be used for retrieving the information contained in a DSL signal by taking into account ISDN noise, the DSL signal being transmitted together with the ISDN signal over one and the same communication channel which is constituted.by a twisted pair of copper wires.

In US 2002/0041565 A1, a system and a method are disclosed for the identification of cross-talk sources in DSL service loops. The cross-talk is described to originate from electromagnetic coupling between twisted pair lines, of which typically a plurality is wrapped up in a single cable. The cross-talk is identified by correlating a measured frequency spectrum with a set of predefined power spectral densities.

In WO 02/13405 A2, systems and methods are described for determining transmission line characteristics. This may include estimating or identifying various cross-talk and disturbance sources on a signal channel. The sources of cross-talk or disturbances are identified by correlating a measured frequency spectrum with a set of predefined power spectral densities, each corresponding to a particular type of cross-talk or source of disturbance.

Accordingly, in the above-mentioned systems and methods, sources of noise or of disturbances are identified. These sources of noise and disturbances are basically due to communication signals transmitted in the same frequency range, but on different signal lines.

In US 6,205,410 B1, a system and a method for bit loading in discrete multi-tone transceivers, e.g. a DSL modem, are described. The bit loading is adjusted on the basis of a signal-to-noise ratio which is determined for each of the signal tones. An estimate of this signal-to-noise ratio is determined by transmitting a tone at the center frequency of each signal channel.

In EP 1 324 557 A1, which constitutes prior art according to Article 54(3) EPC, an ADSL bit loading scheme with excess noise margin is described. It is proposed to allocate data to sub-channels used for ADSL transmission over a communication link which supports further system transmissions. An expected interference impact from the further system transmissions is estimated for the ADSL sub-channels. It is proposed to compare the actual noise on the signal line with the expected noise due to the disturbers, which may or not have been active at the time the actual noise was estimated. If it is determined based on the actual noise that the expected disturbers are absent, a "pre-compensation" for the disturbers is accomplished to improve the stability of the connection.

The public switched telephone network (PSTN) provides the most widely available form of electronic communication for most individuals and businesses. Structured originally to provide voice communication with its consequent narrow bandwidth requirements, the PSTN increasingly relies on digital systems to meet the service demand. However, a major limiting factor in the ability to implement high rate digital transmission has been the subscriber loop between the telephone central office (CO) and the remote subscriber terminal (RT). This loop most commonly comprises a single pair of twisted wires which are well suited to carrying low-frequency voice communications for which a bandwidth of 0-4 kHz is quite adequate, but which do not really accommodate broadband communications (i.e. bandwidths on the order of hundreds of kilohertz or more) without adopting new techniques for communication.

One approach to this problem has been the development of discrete multitone digital subscriber line technology (DMT DSL). This and other forms of discrete multitone digital subscriber line technology (such as ADSL, HDSL, etc.) will commonly be referred to hereinafter generically as "DSL technology" or simply as "DSL".

In DSL technology, communication over the local subscriber loop between the central office and the remote subscriber terminal is accomplished by modulating the data to be transmitted onto a multiplicity of discrete frequency carriers which are summed together and then transmitted over the subscriber loop. Individually, the carriers form discrete, non-overlapping communication subchannels of limited bandwidth; collectively, they form what is effectively a broadband communications channel. At the receiver end, the carriers are demodulated and the data is recovered from them.

The data symbols that are transmitted over each subchannel carry a number of bits that may vary from subchannel to subchannel, dependent on the signal-to-noise ratio (which is simply referred to as "SNR" in the following) of the subchannel. The number of bits that can be accommodated under specific communication conditions is known as the "bit allocation" of the subchannel, and is calculated for each subchannel in a known manner as a function of the measured SNR of the subchannel and the bit error rate associated with it. The bit allocation information is stored at both ends of the communication pair link for use in defining the number of bits to be used on the respective subchannels in transmitting data to a particular receiver. Other subchannel parameters such as subchannel gains, time and frequency domain equalizer coefficients, and other characteristics may also be stored to aid in defining the subchannel.

Although DSL communication systems do in fact provide a significantly increased bandwidth for dated communications, special precautions are required to avoid interference with ordinary voice communications and associated signaling that may be taking place over the subscriber line at the same time that the broadband data is being carried. These voice communications and their associated signaling, commonly referred to as "plain old telephone service" or "POTS", presently are isolated from the data communications by modulating the data communications onto frequencies that are higher than those used for POTS. The data communications and POTS signals are thereafter separately retrieved by appropriate demodulation and filtering. The filters which separate the data communications and the POTS are commonly referred to as "splitters". The voice and data communications must be separated at both the central office and the remote subscriber terminal, and thus splitters must be installed at both locations.

U.S. patent application no. 20030026282, on which the above explanation regarding the DSL technology is mainly based, discloses a splitterless multicarrier modem for use in DSL communications, which transmits and receives data over the local subscriber loop in common with voice information over the loop, while avoiding the need for voice/data splitters. The modem responds to disruptions associated with "disturbance events" such as on-hook to off-hook transitions and the like by rapidly switching between pre-stored channel parameter control sets defining communications over the loop under varying conditions. This U.S. patent application has a filing and publication date later than the priority application underlying the present patent application. However, this publication does not deal with the problem of noise being induced by voice communications and affecting the SNR when retrieving the information from the data communication signal.

For example, ADSL data communication services can be deployed with an ISDN ("integrated services digital network") basic access (BA) on the same subscriber line using frequency-division duplexing. The presence of the ISDN signal introduces in-band noise for the respective ADSL system implemented in an ADSL modem which can cause performance degradation. The in-band noise (which is referred to as "ISDN noise" in the following) depends on the characteristics of the respective splitter and the receive-path filtering of the ADSL system. In an ideal situation, a particular training connection of an ADSL modem is established with the ISDN noise being present throughout the training phase. Such a training connection is established during the set-up procedure of the ADSL modem connection and helps to check the connection properties and, in dependence thereon, to adjust the transmission settings both at the central office side and at the subscriber terminal side. In particular, the training phase allows to obtain information on the ISDN noise which may be present on the subscriber line, and thereafter the data information contained in the ADSL data signal can be retrieved by appropriate bit loading with the channel estimation being based on the complete information on the ISDN noise.

However, in practice, ISDN noise might not be present for the training, but may be turned on only later during the normal operation of the ADSL system. If the training is performed without considering the ISDN noise, the resulting bit loading operation might be too optimistic for the connection. The disturbances from the ISDN noise can cause CRCs ("cycle redundancy check") and link failure.

Therefore, the object underlying the present invention is to provide a method and a corresponding apparatus for retrieving information, in particular data information, transmitted with a signal, in particular a data communication signal, over a signal channel, in particular a communication channel of a communication network, by taking into account noise induced by a further signal, in particular a voice communication signal, transmitted over the same signal channel at the same time, even if no such noise is present for measuring it during a training phase so as to allow a reliable retrieval or recovery of the aforesaid information if the noise may be turned on only after the respective connection is established.

According to the present invention, this object is achieved by a method for retrieving information transmitted with a signal over a signal channel as defined in independent claim 1 and a signal processing apparatus as defined in independent claim 27. The dependent claims define preferred and advantageous embodiments of the present invention.

According to the present invention, it is proposed that noise affecting a first signal and caused by a second signal being transmitted over the same signal channel or signal line and at the same time as the first signal, but in a different frequency range, is estimated so as to allow to retrieve the information transmitted with the first signal by taking into account the estimated noise caused by the second signal.

The present invention is in particular applicable to fixed-line or wired communication networks, and the first signal is preferably a data communication signal, for example an ADSL signal or a DSL signal in general. The second signal is preferably a voice communication signal, for example an ISDN signal. As a matter of course, the present invention is not limited to DSL-ISDN-systems, but may be applied to communication networks and even to signal transmission in general, where a plurality of signals are transmitted at the same time over one and the same physical signal channel using frequency-division multiplexing and where the recovery of information transmitted with one of these signals is disturbed by noise caused by another one of the signals. However, in the following, the invention will be explained with reference to the preferred field of application, namely the use in a communication network, the aforesaid first and second signals being communication signals transmitted over a communication channel.

Before estimating the noise, it is preferably detected whether noise caused by the second communication signal is present and can be measured so as to be able to conduct a respective training phase. If such noise is present, the regular training procedure may be performed. However, if such noise is not present, then in accordance with the present invention the effect of the induced noise on the first communication signal, in particular on the measurement of the SNR thereof, is estimated. This estimation is then used for adjusting the respective communication apparatus, which is for example a DSL modem, for retrieving the information from the first communication signal by taking into account the estimated noise.

According to a preferred embodiment, a pre-measured and pre-stored noise spectrum is used and shaped with the filter components of the respective communication apparatus (modem) before it is added to the total noise. The total noise is then used to compute the SNR, in particular the SNR for each tone.

It is required to conduct the pre-measurement of this noise spectrum only once, with noise being present on the communication channel, whereby this pre-measured or pre-estimated noise spectrum may be determined using averaging periodograms, and the pre-estimated noise spectrum may then be recorded and saved along with the corresponding settings of the respective communication apparatus used for this measurement.

During the normal operation of the communication apparatus, the average input signal power may be determined when transmitting a test signal, for example the periodic REVERB signal defined for ADSL systems. Then, the settings of the respective communication apparatus are preferably adjusted in dependence on this average input signal power. Furthermore, by using a further test signal, for example the random MEDLEY signal defined for ADSL systems, the noise spectrum for this further test signal may be estimated, and a shaped noise spectrum may be computed. In an ADSL modem, this can be done by shaping the noise spectrum with the combined frequency response of the time domain equalizer (TDQ) and frequency domain equalizer (FDQ), which are used in every regular ADSL modem. Finally, according to the preferred embodiment, the Medley SNR is calculated for every tone using the shaped noise spectrum so as to be able to retrieve very reliably the transmitted information.

The present invention prevents CRCs and link failure when no noise signal is present after the connection is established. It achieves as good data rates as those with noise being turned on during a training phase and is robust for different line conditions.

In the following, with reference to the accompanying drawings, the present invention will be explained and described in more detail referring to preferred embodiments of the present invention.

Figure 1 shows schematically the transmission of an ISDN communication signal and an ADSL communication signal between a central office and a subscriber terminal using a communication apparatus in the form of an ADSL modem according to a preferred embodiment of the present invention,

Figure 2 shows a flow chart illustrating a method for ISDN noise estimation according to a preferred embodiment of the present invention, and

Figures 3-5 show charts for illustrating the results and advantages which can be achieved with the aid of the present invention.

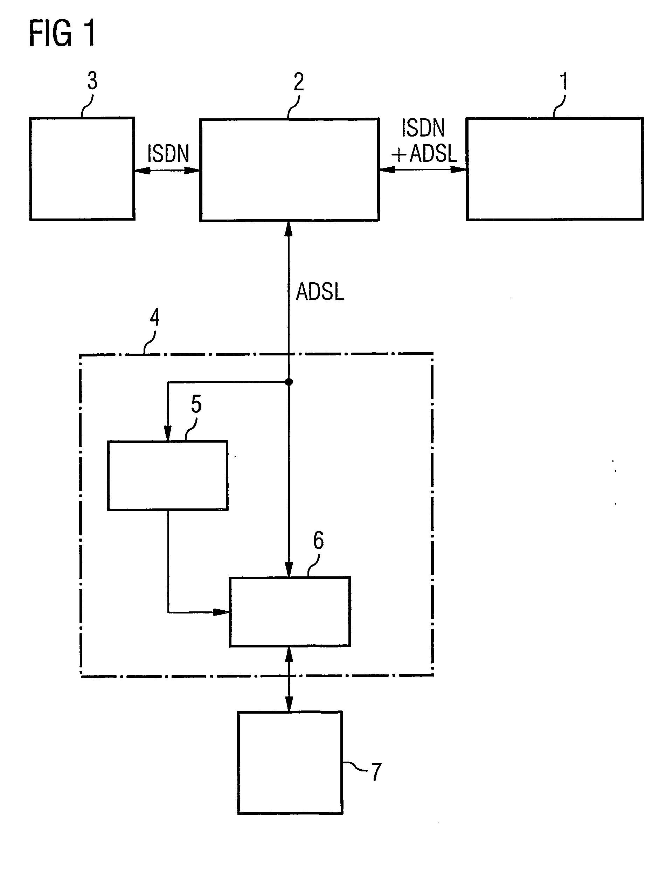

Figure 1 schematically shows a communication between a central office (CO) 1 and a remote subscriber terminal (RT) of a fixed-line communication network. The remote subscriber terminal is associated with a splitter 2 being connected to an ISDN device 3, for example an ISDN telephone, and an ADSL modem 4 being connected to an input/output device 7 for inputting and outputting respective data or information. Between the central office 1 and the splitter 2, the ISDN communication signal and the ADSL communication signal are transmitted in both directions at the same time on the same communication channel, that is to say on the same subscriber line, using frequency-division duplexing. The splitter 2 extracts the ISDN communication signal from the composite signal received from the central office 1 and forwards the same to the ISDN device 3. Furthermore, the splitter 2 extracts the ADSL communication signal from the composite signal and forwards the same to the ADSL modem 4. Vice versa the splitter 2 receives the ISDN communication signal from the ISDN device 3 and the ADSL communication signal from the ADSL modem 4 and combines both communication signals to the composite communication signal so as to transmit it to the central office 1. As the ISDN communication signal and the ADSL communication signal are transmitted over the same subscriber line using frequency-division duplexing, both communication signals are transmitted in frequency ranges which do not overlap one another. In particular, the ADSL communication signal is transmitted in a frequency range which is a multiple of the frequency range of the ISDN communication signal.

As can be taken from Figure 1, the ADSL modem 4 comprises means 5 for estimating and detecting ISDN noise present in the ADSL communication signal and for adjusting settings of the ADSL modem, in particular of means 6 which are provided for retrieving and further processing data contained in the ADSL communication signal, depending on the ISDN noise estimated by the means 5. In the following, the means 5 are referred to as ISDN noise estimation means, and the means 6 are referred to as data retrieval means. Of course, both means 5, 6 may also be provided in the form of a single component in the ADSL modem 4.

As a matter of course, an ADSL modem 4 of the type shown in Figure 1 may also be provided in the central office 1.

The ISDN noise estimation means 5 are designed to predict or estimate the influence of the ISDN noise on the training process described above, even if ISDN noise is not present. In particular, the ISDN noise estimation means 5 perform an algorithm which conducts an ISDN noise detection. If no ISDN is detected, the algorithm estimates the effect of the ISDN induced noise on the measurement of the SNR. This estimation is then used to adjust the SNR of the data retrieval means 6 for bit loading. In particular, the goal is to match the adjusted SNR with the SNR trained during the training process with ISDN noise being present in order to avoid overloading. It should be noted that the ISDN noise estimation means 5 estimate the effect of the ISDN noise on the measurement of the SNR for every tone of the ADSL communication signal, and this estimation is then used to adjust the SNR for every tone of the ADSL communication signal for bit loading.

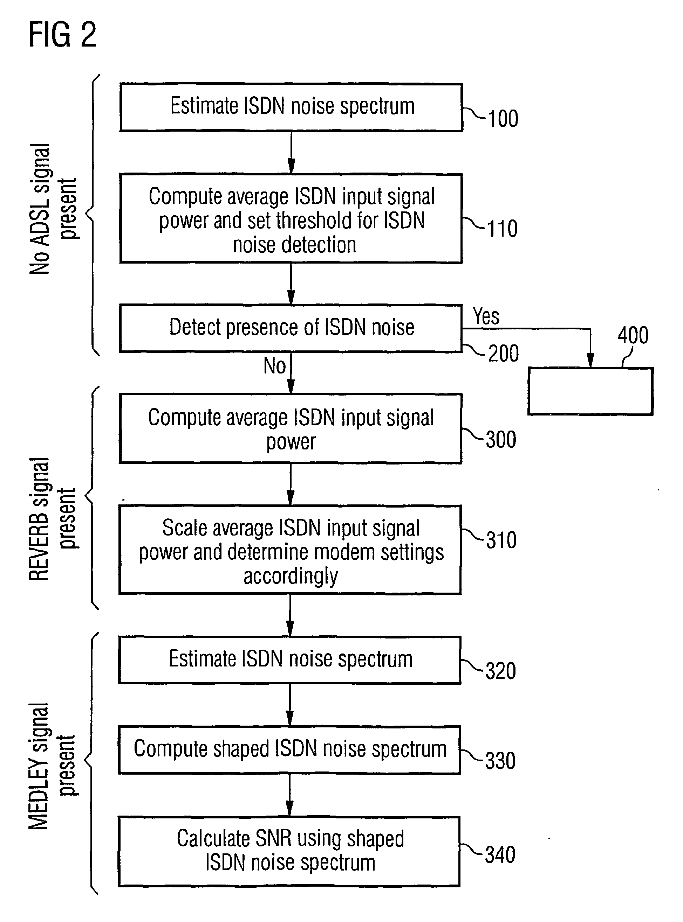

A preferred embodiment of the algorithm performed by the ISDN noise estimation means 5 is shown in Figure 2 in the form of a flow chart. The algorithm can be subdivided into three main phases, namely a phase comprising steps 100, 110 for pre-estimation of an input ISDN noise spectrum, a phase comprising step 200 for ISDN noise detection, and a phase comprising steps 300-340 for conducting ISDN noise estimation and adjusting the settings of the data retrieval means 6 of Figure 1. Furthermore, as shown in Figure 2, the individual steps of the algorithm can also be subdivided in terms of the respective ADSL signal conditions, that is to say depending on the kind of signals being present during carrying out the respective steps, which will be described in more detail in the following.

The steps 100, 110 need not be performed continuously during the normal operation of the splitter 2 and the ADSL modem 4. Instead, it is only required to conduct these steps once for a particular combination of the splitter 2 and the ADSL modem 4, and the results obtained during these steps can be saved in the ADSL modem 4 or in the ISDN noise estimation means 5 so as to be able to access this information during the normal operation of the ADSL modem 4. For example, the steps 100, 110 can be performed at the beginning of a start-up or initialization phase of the ADSL modem 4.

In step 100, the ISDN noise estimation means 5 of the ADSL modem 4 estimate the ISDN noise spectrum using averaging periodograms $N_k^2$ with ISDN noise being present at the input of the ADSL modem 4, where k designates the k-th tone. In particular, the step 100 (as well as the step 110) can be performed during the so-called C_QUIET2 and R_QUIET2 mode of the central office and the remote subscriber terminal, respectively, which is defined for ADSL communication. The pre-estimated noise spectrum $N_k^2$ is recorded and saved along with the respective settings, in particular the settings of a programmable gain amplifier (PGA) included in the ISDN noise estimation means 5 and/or the data retrieval means (6), used for this measurement. It should be noted that post-processing of the pre-estimated noise spectrum may be necessary as follows so as to achieve optimal performance:

$$(1) \quad \hat{N}_k^2 = N_k^2 - \varepsilon_k$$

The value $\varepsilon_k$ has to be determined experimentally for every tone.

In step 110, the average power $P_{ISDN}$ of the ISDN input signal is computed and recorded, and a threshold for ISDN noise detection is set to be one half of $P_{ISDN}$.

In the same signal condition, i.e. in the C_QUIET2 and R_QUIET2 mode of the central office 1 and the remote subscriber terminal 2, 4, respectively, it is then detected whether ISDN noise is present. This is done by computing the average power $P_{ICN}$ of the input signal, that is to say by measuring the idle channel noise (ICN) power, and comparing it with the threshold set in step 110. In step 200, it is decided that ISDN noise is present if $P_{ICN}$ is higher than the threshold. If ISDN noise can be detected in step 200, the following steps 300-340 are skipped and the regular training procedure known from the prior art is performed in step 400. If however, no ISDN noise is detected in step 200, the algorithm proceeds with steps 300-340 for estimating the influence of ISDN noise on the ADSL communication signal.

In the next phase of the algorithm shown in Figure 2, a periodic or cyclic test signal, which is called REVERB signal under ADSL, is transmitted between the central office and the remote subscriber terminal, and under this signal condition the ADSL modem 4 or the ISDN noise estimation means 5 thereof compute the average input signal power $P_{reverb}$. Then the settings of the ADSL modem 4, in particular the PGA settings, are determined based on

$P'_{ISDN} + P_{reverb}$, where $P'_{ISDN}$ is the scaled version of $P_{ISDN}$ according to the difference of the PGA settings used for the measurement of $P_{ISDN}$ and $P_{reverb}$, respectively (see steps 300 and 310 of Figure 2).

During the next phase of the algorithm of Figure 2, another test signal is transmitted between the central office 1 and the remote subscriber terminal 2, 4, which under ADSL is known as the so-called MEDLEY signal comprising a random signal sequence. With this random test signal being present at the input of the ADSL modem 4, first the ISDN noise power spectrum is estimated for the Medley test signal on the basis of the pre-estimated ISDN noise power spectrum, which was recorded and saved in the ADSL modem 4 during step 100.

Then, in step 330, a shaped ISDN noise power spectrum is computed by shaping the input ISDN noise power spectrum $\dot{N}_k^2$ with the combined frequency response of the time domain equalizer (TDQ) and the frequency domain equalizer (FDQ) of the ADSL modem 4 as follows:

$$(2) \quad (E_k^{ISDN})^2 = \frac{1}{L} \sum_{l=0}^{L-1} \left| X_{k,l} G_k H_k^{-1} \right|^2 = \left| G_k \right|^2 \left| H_k^{-1} \right|^2 N_k^2$$

$G_k$ and $H_k^{-1}$ are the frequency response of the time domain equalizer and the frequency domain equalizer, respectively, at the k-th tone. L is the number of symbols used for periodogram averaging. $X_{k,l}$ is the frequency component of the input ISDN noise at the k-th tone of the 1-th symbol. The input ISDN noise power spectrum $N_k^2$ is defined as follows:

$$(3) \quad N_k^2 = \frac{1}{L} \sum_{l=0}^{L-1} \left| X_{k,1} \right|^2$$

This noise shaping and compensation method is adapted to different line conditions by estimating the ISDN induced noise power with the trained time domain equalizer and frequency domain equalizer of the ADSL modem 4.

In step 340 of the algorithm shown in Figure 2, finally, the Medley SNR is calculated using the shaped noise power spectrum. In general, the Medley SNR for the k-th tone is computed using the signal $S_k^2$ power and the noise power $E_k^2$ of the k-th tone as follows:

$$(4) \quad SNR_k = 10\log10\left(\frac{S_k^2}{E_k^2}\right)$$

The noise power spectrum is estimated by averaging periodograms computed with discrete Fourier transformation (DFT). One way to adjust the Medley SNR is to directly subtract the pre-estimated SNR deduction ($\Delta SNR_k$) for each tone from the measured $SNR_k$, as shown in equation 5:

$$(5) \quad \hat{SNR}_k = SNR_k - \Delta SNR_k$$

However, this is a non-adaptive approach where $\Delta SNR_k$ has to be pre-measured or pre-estimated for different loop length and gross talk noises. Another way for the SNR adjustment is to combine the ISDN induced noise power $(E_k^{ISDN})^2$ with the measured noise power as follows:

$$(6) \quad \hat{SNR}_k = 10\log10\left(\frac{S_k^2}{\hat{E}_k^2}\right) \quad \text{where} \quad \hat{E}_k^2 = E_k^2 + (E_k^{ISDN})^2$$

As can be seen, according to the algorithm of Figure 2, a pre-measured or pre-estimated ISDN noise power spectrum is used to reduce the PGA settings of the ADSL modem 4 in order to avoid clipping. In addition, the Medley SNR for each tone is lowered or adjusted by using the shaped ISDN noise power spectrum so as to enable appropriate bit loading.

In general, in order to avoid overestimation of the ISDN power contribution for long loops, $N_k^2$ should be measured or estimated with ISDN attached on one side only (either the central office 1 or the remote subscriber terminal 2, depending on where the detection scheme is to be implemented), but not both together. For long loops the remote ISDN signal will not contribute significantly, and it is for long loops where the ISDN detection and estimation approach is most important. It is also important to disable bitswapping at the local end in view of ISDN noise results in increased margins at the lower tones if ISDN noise is not present. These increased margins would be destroyed by a bitswapping mechanism.

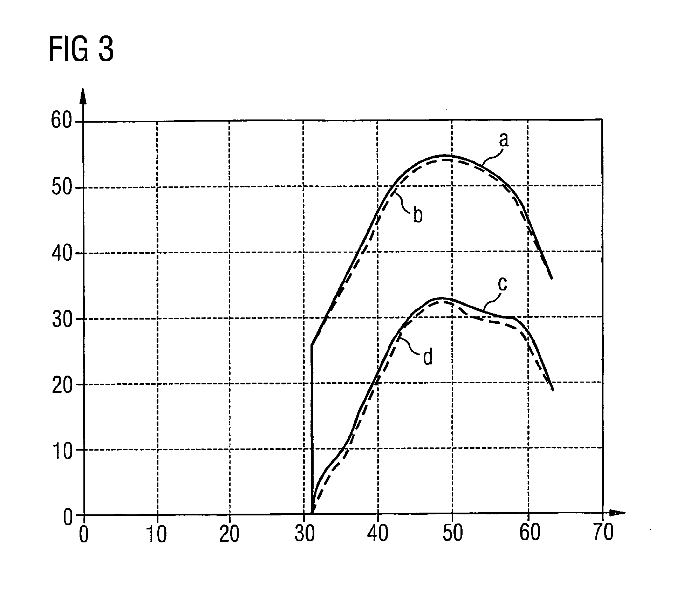

The performance of the proposed algorithm was evaluated with the GEMINAX (Global Enhanced Multiport Integrated Transceiver) test platform of the applicant. The results are illustrated in Figures 3 to 5.

In Figure 3, the Medley SNRs for both 1000m and 3000m loops from the noise shaping are compared with those trained with ISDN on. Curves a, b relate to a 1000m loop, and curve a corresponds to the results obtained by training with ISDN on, while curve b corresponds to the results obtained with ISDN off by using the algorithm of Figure 2. Curves c, d relate to a 3000m loop, and curve c corresponds to the results obtained by training with ISDN on, while curve d corresponds to the results obtained with ISDN off by using the algorithm of Figure 2. For both loops, it is observed that the adjusted SNRs using the predicted ISDN induced noise spectrum are very close to the SNRs measured when ISDN noise is present. The closely matched SNRs indicate that the proposed algorithm achieves as good data rates as those trained with ISDN on. It should be noted that Figure 3 shows the Medley SNR (dB) over the tone number with white noise at -140 dBm.

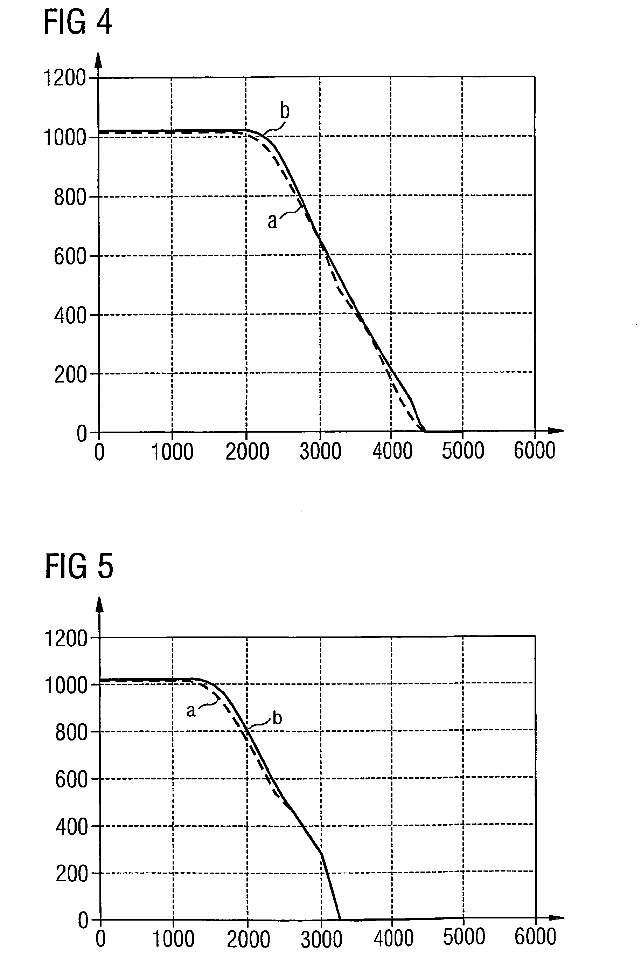

Figure 2 shows US loop reach test results by depicting the payload rate (kbps) over the loop length (m) with additive white noise (AWGN) being present. In addition, the test was conducted in the interleaved mode with TCM on and RS on with an ETSI 0.4 mm cable. Curve a of Figure 4 shows the US data rates obtainable by using the ISDN detection and estimation method of Figure 2 with ISDN off, while curve b shows the US data rates obtainable by training with ISDN on. These results demonstrate that the proposed algorithm performs well regardless of the loop length.

Finally, Figure 5 compares the US loop reach test results with ETSI B noise on. The test conditions interleaved mode, TCM on, RS on, ETSI 0.4 mm cable) were the same as for the test shown in Figure 4. Again, the payload rate (kbps) is depicted over the loop length (m). Curve a of Figure 5 shows the US data rates obtained by using the algorithm of Figure 2 with ISDN off, while curve b shows the US data rates obtained by training with ISDN on. The closely matched rates show the robustness of the proposed method to different noise conditions.

**Claims**

1. Method for retrieving information transmitted with a signal,
   comprising the steps of

   (a) estimating the effect of noise on the measurement of a signal-to-noise ratio of a first signal transmitted over a signal channel, the noise being caused by a second signal transmitted in a different frequency range than the first signal at the same time as the first signal and over the same signal channel, on the basis of a pre-estimated noise spectrum previously determined and recorded in a state with noise caused by the second signal being present on the signal channel, and
   (b) retrieving information transmitted with the first signal from the first signal on the basis of the estimated effect of noise caused by the second signal.

2. Method according to claim 1,
   **characterized in that**
   before said step (a) it is detected whether there is noise caused by the second signal present on the signal channel, and
   said steps (a) and (b) are performed only if no noise caused by the second signal can be detected, while otherwise the transmitted information of the first signal is retrieved on the basis of the detected noise caused by the second signal.

3. Method according to claim 1 or claim 2,
   **characterized in that**
   before said steps (a) and (b), with noise caused by the second signal being present on the signal channel, the corresponding pre-estimated noise spectrum is determined and recorded in a state of the signal channel where no first signal is present.

4. Method according to claim 3,
   **characterized in that**
   the pre-estimated noise spectrum is determined using averaging periodograms.

5. Method according to any one of the preceding claims,
   **characterized in that**
   the method is performed in a signal processing apparatus (4) and settings of the signal processing apparatus (4) suitable for determining the pre-estimated noise spectrum are determined and recorded.

6. Method according to any one of the preceding claims,
   **characterized in that**

   the pre-estimated noise spectrum is post-processed according to $\hat{N}_k^2 = N_k^2 - \varepsilon_k$, where $N_k^2$ is the pre-estimated noise spectrum, $\varepsilon_k$ is a post-processing parameter, $\hat{N}_k^2$ is the post-processed pre-estimated noise spectrum, and index k is a k-th signal tone.

7. Method according to claim 6,
   **characterized in that**
   the post-processing parameter $\varepsilon_k$ is determined experimentally.

8. Method according to any one of the preceding claims,
   **characterized in that**
   before said steps (a) and (b), with noise caused by the second signal being present on the signal channel an average noise signal power of this noise is determined.

9. Method according to claim 2 and 8,
   **characterized in that**
   a threshold for said detecting whether there is noise caused by the second signal present on the signal channel is defined to be substantially one half of the determined average noise signal power.

10. Method according to any one of the preceding claims,
    **characterized in that**
    during said steps (a) and (b) an average input signal power is determined when transmitting a test signal as said first signal, and settings of a signal processing apparatus (4) performing said method are adjusted based on said average input signal power.

11. Method according to claim 10 and any one of claims 8 or 9,
    **characterized in that**
    during said steps (a) and (b) said average noise signal power is scaled depending on a difference of settings of the signal processing apparatus used for determining the average noise signal power on the one hand and for determining the average input signal power on the other hand, and
    the settings of the signal processing apparatus (4) are adjusted depending on the scaled average noise signal power.

12. Method according to claim 11,
    **characterized in that**
    the settings of the signal processing apparatus (4) are adjusted depending on the sum of the scaled average noise signal power and the average input signal power.

13. Method according to any one of claims 10-12,
    **characterized in that**
    said test signal is a periodic signal.

**14.** Method according to any one of the preceding claims,
**characterized in that**
during said step (a), the effect of noise caused by the second signal is estimated by shaping the pre-estimated noise spectrum.

**15.** Method according to claim 14,
**characterized in that**
said shaping of the pre-estimated noise spectrum is performed with a combined frequency response of a time domain equalizer and a frequency domain equalizer of a signal processing apparatus (4) performing said method.

**16.** Method according to claim 15,
**characterized in that**
said shaping is performed in accordance with

$$(E_k^{ISDN})^2 \;=\; \frac{1}{L}\;\sum_{l=0}^{L-1}\;\left|X_{k,l}G_kH_k^{-1}\right|^2 \;=\; \left|G_k\right|^2\;\left|H_k^{-1}\right|^2\;N_k^2$$

with

$$N_k^2 \;=\; \frac{1}{L}\;\sum_{l=0}^{L-1}\;\left|X_{k,1}\right|^2,$$

where $G_k$ and $H_k^{-1}$ are the frequency response of the time division equalizer and the frequency division equalizer, respectively, at a k-th tone, L is a number of symbols used for the shaping, $X_{k,l}$ is a frequency component of the noise at the k-th tone of a l-th symbol, $N_k^2$ is the pre-estimated noise spectrum and $(E_k^{ISDN})^2$ is the shaped noise spectrum.

**17.** Method according to any one of claims 14-16,
**characterized in that**
said shaping is performed while a test signal being present on the signal channel as said first signal.

**18.** Method according to claim 17,
**characterized in that**
said test signal is a random signal.

**19.** Method according to any one of the preceding claims,
**characterized in that**
for retrieving the information transmitted with the first signal, a signal-to-noise ratio of the first signal is determined depending on the effect of noise estimated during said step (a).

**20.** Method according to claim 19 and any one of claims 14-18,
**characterized in that**
the signal-to-noise ratio is determined using the shaped noise spectrum.

**21.** Method according to claim 20,
**characterized in that**
the signal-to-noise ratio is determined for every signal tone in accordance with

$$S\hat{N}R_k = 10\log10(\frac{S_k^2}{\hat{E}_k^2}) \text{ where } \hat{E}_k^2 = E_k^2 + (E_k^{ISDN})^2,$$

where $S\hat{N}R_k$ is a signal-to-noise ratio for a k-th tone of the first signal, $S_k^2$ is a total signal power at the k-th tone of the first signal, $E_k^2$ is a measured noise power at the k-th tone of the first signal and $(E_k^{ISDN})^2$ is the shaped and estimated noise power at the k-th tone of the first signal.

22. Method according to any one of the preceding claims,
**characterized in that**
the method is performed in a communication network so that the first signal is a first communication signal, the second signal is a second communication signal and the signal channel is a communication channel of the communication network.

23. Method according to any one of the preceding claims,
**characterized in that**
the first signal is a data signal.

24. Method according to claim 23,
**characterized in that**
the first signal is a DSL signal.

25. Method according to any one of the preceding claims,
**characterized in that**
the second signal is a voice signal.

26. Method according to claim 25,
**characterized in that**
the second signal is an ISDN signal.

27. Signal processing apparatus for retrieving information transmitted with a signal over a signal channel,
said signal processing apparatus (4) comprising:

noise estimation means (5) for estimating the effect of noise on the measurement of a signal-to-noise ratio of a first signal transmitted over the signal channel, the noise being caused by a second signal transmitted in a different frequency range than said first signal at the same time as the first signal over the same signal channel, on the basis of a pre-estimated noise spectrum previously determined and recorded in a state with noise caused by the second signal being present on the signal channel, and information retrieval means (6) for retrieving the information transmitted with the first signal over the signal channel on the basis of the estimated noise caused by the second signal as estimated by the noise estimation means (5).

28. Signal processing apparatus according to claim 27,
**characterized in that**
said signal processing apparatus (4) is a communication apparatus used in a communication network, the first signal being a first communication signal, the second signal being a second communication signal, and the signal channel being a communication channel of the communication network.

29. Signal processing apparatus according to claim 28,
**characterized in that**
said signal processing apparatus (4) is a modem.

30. Signal processing apparatus according to any one of claims 27-29,
**characterized in that**

said signal processing apparatus (4) is designed for performing the method according to any one of claims 1-26.

**Patentansprüche**

1.  Verfahren zur Rückgewinnung von Information, welche mit einem Signal übertragen wird, umfassend folgende Schritte

    (a) Abschätzen der Auswirkung eines Rauschens auf die Messung eines Signal-Rausch-Verhältnisses eines ersten Signals, welches über einen Signalkanal übertragen wird, wobei das Rauschen durch ein zweites Signal verursacht wird, welches in einem anderen Frequenzbereich als das erste Signal zu derselben Zeit wie das erste Signal und über denselben Signalkanal übertragen wird, auf der Grundlage eines vorher geschätzten Rauschspektrums, welches vorher in einem Zustand bestimmt und festgehalten wird, in welchem ein Rauschen, welches durch das zweite Signal verursacht wird, auf dem Signalkanal vorhanden ist, und
    (b) Rückgewinnen einer Information, welche mit dem ersten Signal übertragen wird, von dem ersten Signal auf der Grundlage der abgeschätzten Auswirkung des Rauschens, welches durch das zweite Signal verursacht wird.

2.  Verfahren nach Anspruch 1,
    **dadurch gekennzeichnet,**
    **dass** vor dem Schritt (a) bestimmt wird, ob das Rauschen, welches durch das zweite Signal verursacht wird, auf dem Signalkanal vorhanden ist, und
    **dass** die Schritte (a) und (b) nur ausgeführt werden, wenn kein Rauschen, welches durch das zweite Signal verursacht wird, erfasst werden kann, während sonst die übertragene Information des ersten Signals auf der Grundlage des erfassten Rauschens, welches durch das zweite Signal verursacht wird, zurückgewonnen wird.

3.  Verfahren nach Anspruch 1 oder Anspruch 2,
    **dadurch gekennzeichnet,**
    **dass** vor den Schritten (a) und (b), wobei Rauschen, welches durch das zweite Signal verursacht wird, auf dem Signalkanal vorhanden ist, das entsprechende vorher geschätzte Rauschspektrum in einem Zustand des Signalkanals, in welchem kein erstes Signal vorhanden ist, bestimmt und aufgenommen wird.

4.  Verfahren nach Anspruch 3,
    **dadurch gekennzeichnet,**
    **dass** das vorher geschätzte Rauschspektrum unter Verwendung eines Mittelwert bildenden Periodogramms bestimmt wird.

5.  Verfahren nach einem der vorhergehenden Ansprüche,
    **dadurch gekennzeichnet,**
    **dass** das Verfahren in einer Signalverarbeitungsvorrichtung (4) durchgeführt wird und dass Einstellungen der Signalverarbeitungsvorrichtung (4), welche geeignet sind, um das vorher geschätzte Rauschspektrum zu bestimmen, bestimmt und festgehalten werden.

6.  Verfahren nach einem der vorhergehenden Ansprüche,
    **dadurch gekennzeichnet,**

    **dass** das vorher geschätzte Rauschspektrum gemäß $\hat{N}_k^2 = N_k^2 - \varepsilon_k$ nachbearbeitet wird, wobei $N_k^2$ das vorher geschätzte Rauschspektrum, $\varepsilon_k$ ein Parameter der Nachbearbeitung, $\hat{N}_k^2$ das nachbearbeitete vorher geschätzte Rauschspektrum und ein Index k einem k-ten Signalton entspricht.

7.  Verfahren nach Anspruch 6,
    **dadurch gekennzeichnet,**
    **dass** der Parameter $\varepsilon_k$ der Nachbearbeitung experimentell bestimmt wird.

8.  Verfahren nach einem der vorhergehenden Ansprüche,
    **dadurch gekennzeichnet,**
    **dass** vor den Schritten (a) und (b), wobei das Rauschen, welches durch das zweite Signal verursacht ist, auf dem Signalkanal vorhanden ist, ein Mittelwert einer Rauschsignalleistung dieses Rauschen bestimmt wird.

9. Verfahren nach Anspruch 2 und 8,
**dadurch gekennzeichnet,**
**dass** ein Schwellenwert für die Bestimmung, ob das Rauschen, welches durch das zweite Signal verursacht wird, auf dem Signalkanal vorhanden ist, derart definiert wird, dass er im Wesentlichen einer Hälfte des bestimmten Mittelwerts der Rauschsignalleistung entspricht.

10. Verfahren nach einem der vorhergehenden Ansprüche,
**dadurch gekennzeichnet,**
**dass** während der Schritte (a) und (b) ein Mittelwert einer Eingangssignalleistung bestimmt wird, wenn ein Testsignal als das erste Signal übertragen wird, und dass Einstellungen einer Signalverarbeitungsvorrichtung (4), welche das Verfahren durchführt, abhängig von dem Mittelwert der Eingangssignalleistung eingestellt werden.

11. Verfahren nach Anspruch 10 und Anspruch 8 oder 9,
**dadurch gekennzeichnet,**
**dass** während der Schritte (a) und (b) der Mittelwert der Rauschsignalleistung abhängig von einer Differenz der Einstellungen der Signalverarbeitungsvorrichtung, welche zur Bestimmung des Mittelwerts der Rauschsignalleistung auf der einen Seite und zur Bestimmung des Mittelwerts der Eingangssignalleistung auf der anderen Seite verwendet werden, skaliert wird, und
**dass** die Einstellungen der Signalverarbeitungsvorrichtung (4) abhängig von dem skalierten Mittelwert der Rauschsignalleistung eingestellt werden.

12. Verfahren nach Anspruch 11,
**dadurch gekennzeichnet,**
**dass** die Einstellungen der Signalverarbeitungsvorrichtung (4) abhängig von der Summe aus dem skalierten Mittelwert der Rauschsignalleistung und dem Mittelwert der Eingangssignalleistung eingestellt werden.

13. Verfahren nach einem der Ansprüche 10-12,
**dadurch gekennzeichnet,**
**dass** das Testsignal ein periodisches Signal ist.

14. Verfahren nach einem der vorhergehenden Ansprüche,
**dadurch gekennzeichnet,**
**dass** während des Schritts (a) die Auswirkung des Rauschens, welches durch das zweite Signal verursacht wird, abgeschätzt wird, indem das vorher geschätzte Rauschspektrum geformt wird.

15. Verfahren nach Anspruch 14,
**dadurch gekennzeichnet,**
**dass** das Formen des vorher geschätzten Rauschspektrums mit einer kombinierten Frequenzantwort eines Entzerrers im Zeitbereich und eines Entzerrer im Frequenzbereich einer Signalverarbeitungsvorrichtung (4), welche das Verfahren durchführt, durchgeführt wird.

16. Verfahren nach Anspruch 15,
**dadurch gekennzeichnet,**
**dass** das Formen gemäß

$$\left(E_k^{ISDN}\right)^2 = \frac{1}{L}\sum_{l=0}^{L-1}\left|X_{k,l}G_kH_k^{-1}\right|^2 = \left|G_k\right|^2\left|H_k^{-1}\right|^2 N_k^2 \text{ , mit } N_k^2 = \frac{1}{L}\sum_{l=0}^{L-1}\left|X_{k,l}\right|^2$$

durchgeführt wird, wobei $G_k$ und $H_k^{-1}$ die Frequenzantwort des Entzerrers im Zeitbereich bzw. des Entzerrers im Frequenzbereich bei einem k-ten Ton ist, wobei L eine Anzahl von Symbolen ist, welche für das Formen eingesetzt werden,

wobei $X_{k,l}$ eine Frequenzkomponente des Rauschens bei dem k-ten Ton eines 1-ten Symbols ist, wobei $N_k^2$ das vorher geschätzte Rauschspektrum und $\left( E_k^{ISDN} \right)^2$ das geformte Rauschspektrum ist.

17. Verfahren nach einem der Ansprüche 14-16,
**dadurch gekennzeichnet,**
**dass** das Formen durchgeführt wird während ein Testsignal auf dem Signalkanal als das erste Signal vorhanden ist.

18. Verfahren nach Anspruch 17,
**dadurch gekennzeichnet,**
**dass** das Testsignal ein Zufallssignal ist.

19. Verfahren nach einem der vorhergehenden Ansprüche,
**dadurch gekennzeichnet,**
**dass** zum Rückgewinnen der Information, welche mit dem ersten Signal übertragen wird, ein Signal-Rausch-Verhältnis des ersten Signals abhängig von der Auswirkung des Rauschen, welches während des Schritts (a) abgeschätzt wird, bestimmt wird.

20. Verfahren nach Anspruch 19 und einem der Ansprüche 15-18,
**dadurch gekennzeichnet,**
**dass** das Signal-Rausch-Verhältnis mit dem geformten Rauschspektrum bestimmt wird.

21. Verfahren nach Anspruch 20,
**dadurch gekennzeichnet,**
**dass** das Signal-Rausch-Verhältnis für jeden Signalton gemäß

$$\hat{SNR}_k = 10 \log 10 \left( \frac{S_k^2}{\hat{E}_k^2} \right)$$

bestimmt wird, wobei $\hat{E}_k^2 = E_k^2 + \left( E_k^{ISDN} \right)^2$ gilt,

wobei $\hat{SNR}_k$ ein Signal-Rausch-Verhältnis für einen k-ten Ton des ersten Signals, $S_k^2$ eine Gesamtsignalleistung bei dem k-ten Ton des ersten Signals, $E_k^2$ eine gemessene Rauschleistung bei dem k-ten Ton des ersten Signals und $\left( E_k^{ISDN} \right)^2$ die geformte und geschätzte Rauschleistung bei dem k-ten Ton des ersten Signals ist.

22. Verfahren nach einem der vorhergehenden Ansprüche,
**dadurch gekennzeichnet,**
**dass** das Verfahren in einem Kommunikationsnetz durchgeführt wird, so dass das erste Signal ein erstes Kommunikationssignal, das zweite Signal ein zweites Kommunikationssignal und der Signalkanal ein Kommunikationskanal des Kommunikationsnetzes ist.

23. Verfahren nach einem der vorhergehenden Ansprüche,
**dadurch gekennzeichnet,**
**dass** das erste Signal ein Datensignal ist.

24. Verfahren nach Anspruch 23,

**dadurch gekennzeichnet,**
**dass** das erste Signal ein DSL-Signal ist.

25. Verfahren nach einem der vorhergehenden Ansprüche,
    **dadurch gekennzeichnet,**
    **dass** das zweite Signal ein Sprachsignal ist.

26. Verfahren nach Anspruch 25,
    **dadurch gekennzeichnet,**
    **dass** das zweite Signal ein ISDN-Signal ist.

27. Signalverarbeitungsvorrichtung zur Rückgewinnung einer Information, welche mit einem Signal über einen Signalkanal übertragen wird,
    wobei die Signalverarbeitungsvorrichtung (4) umfasst:

    Rauschabschätzungsmittel (5), um die Auswirkung eines Rauschens auf die Messung eines Signal-Rausch-Verhältnisses eines ersten Signals, welches über den Signalkanal übertragen wird, abzuschätzen, wobei das Rauschen durch ein zweites Signal, welches in einem anderen Frequenzband als das erste Signal zu derselben Zeit wie das erste Signal über denselben Signalkanal übertragen wird, verursacht wird, auf der Grundlage eines vorher geschätzten Rauschspektrums, welches vorher in einem Zustand bestimmt und festgehalten wird, in welchem ein Rauschen, welches durch das zweite Signal verursacht wird, auf dem Signalkanal vorhanden ist, und
    Informationsrückgewinnungsmittel (6), um die Information, welche mit dem ersten Signal über den Signalkanal übertragen wird, abhängig von dem geschätzten Rauschen, welches durch das zweite Signal verursacht wird und welches durch die Rauschabschätzungsmittel (5) abgeschätzt ist, zurückzugewinnen.

28. Signalverarbeitungsvorrichtung nach Anspruch 27,
    **dadurch gekennzeichnet,**
    **dass** die Signalverarbeitungsvorrichtung (4) eine Kommunikationsvorrichtung ist, welche in einem Kommunikationsnetz eingesetzt ist, wobei das erste Signal ein erstes Kommunikationssignal, das zweite Signal ein zweites Kommunikationssignal und der Signalkanal ein Kommunikationskanal des Kommunikationsnetzes ist.

29. Signalverarbeitungsvorrichtung nach Anspruch 28,
    **dadurch gekennzeichnet,**
    **dass** die Signalverarbeitungsvorrichtung (4) ein Modem ist.

30. Signalverarbeitungsvorrichtung nach einem der Ansprüche 27-29,
    **dadurch gekennzeichnet,**
    **dass** die Signalverarbeitungsvorrichtung (4) derart entworfen ist, dass sie das Verfahren gemäß einem der Ansprüche 1-26 ausführt.

**Revendications**

1. Procédé pour extraire des informations transmises avec un signal,
   comprenant les étapes consistant à

   (a) estimer l'effet du bruit sur la mesure du rapport signal/bruit d'un premier signal transmis sur un canal de signalisation, le bruit étant causé par un second signal transmis dans une gamme de fréquences différente de celle du premier signal en même temps que le premier signal et sur le même canal de signalisation, compte tenu d'un spectre de bruit pré-estimé préalablement déterminé et enregistré dans un état avec le bruit causé par le second signal présent sur le canal de signalisation, et
   (b) extraire les informations transmises avec le premier signal du premier signal compte tenu de l'effet estimé du bruit causé par le second signal.

2. Procédé selon la revendication 1,
   **caractérisé en ce que**
   avant ladite étape (a), on détecte si du bruit causé par le second signal est présent sur le canal de signalisation, et

lesdites étapes (a) et (b) sont exécutées uniquement si aucun bruit causé par le second signal ne peut être détecté, alors qu'autrement les informations transmises du premier signal sont extraites compte tenu du bruit détecté causé par le second signal.

**3.** Procédé selon la revendication 1 ou la revendication 2,
**caractérisé en ce que**
avant lesdites étapes (a) et (b), avec le bruit causé par le second signal présent sur le canal de signalisation, le spectre de bruit pré-estimé correspondant est déterminé et enregistré dans un état du canal de signalisation où aucun premier signal n'est présent.

**4.** Procédé selon la revendication 3,
**caractérisé en ce que**
le spectre de bruit pré-estimé est déterminé en utilisant des périodogrammes moyennés.

**5.** Procédé selon l'une quelconque des revendications précédentes,
**caractérisé en ce que**
le procédé est mis en oeuvre dans un appareil de traitement du signal (4) et des réglages de l'appareil de traitement du signal (4) appropriés pour déterminer le spectre de bruit pré-estimé sont déterminés et enregistrés.

**6.** Procédé selon l'une quelconque des revendications précédentes,
**caractérisé en ce que**

le spectre de bruit pré-estimé est post-traité selon $\hat{N}_k^2 = N_k^2 - \varepsilon_k$, où $N_k^2$ est le spectre de bruit pré-estimé,

$\varepsilon_k$ est un paramètre de post-traitement, $\hat{N}_k^2$ est le spectre de bruit pré-estimé post-traité, et l'indice k est une

k$^{\text{ème}}$ tonalité de signal.

**7.** Procédé selon la revendication 6,
**caractérisé en ce que**
le paramètre de post-traitement $\varepsilon_k$ est déterminé expérimentalement.

**8.** Procédé selon l'une quelconque des revendications précédentes,
**caractérisé en ce que**
avant lesdites étapes (a) et (b), avec le bruit causé par le second signal présent sur le canal de signalisation, une puissance moyenne de signal de bruit est déterminée pour ce bruit.

**9.** Procédé selon les revendications 2 et 8,
**caractérisé en ce que**
un seuil pour détecter si du bruit causé par le second signal est présent sur le canal de signalisation est défini comme sensiblement égal à la moitié de la puissance moyenne de signal de bruit déterminée.

**10.** Procédé selon l'une quelconque des revendications précédentes,
**caractérisé en ce que**
lors desdites étapes (a) et (b), une puissance moyenne de signal d'entrée est déterminée lors de la transmission d'un signal d'essai en tant que ledit premier signal, et des réglages d'un l'appareil de traitement du signal (4) mettant en oeuvre ledit procédé sont ajustés en fonction de ladite puissance moyenne de signal d'entrée.

**11.** Procédé selon la revendication 10 et l'une quelconque des revendications 8 et 9,
**caractérisé en ce que**
lors desdites étapes (a) et (b), ladite puissance moyenne de signal de bruit est réduite en fonction d'une différence de réglages de l'appareil de traitement du signal utilisés pour déterminer la puissance moyenne de signal de bruit d'une part et pour déterminer la puissance moyenne de signal d'entrée d'autre part, et
les réglages de l'appareil de traitement du signal (4) sont ajustés en fonction de la puissance moyenne de signal de bruit réduite.

**12.** Procédé selon la revendication 11,

**caractérisé en ce que**
les réglages de l'appareil de traitement du signal (4) sont ajustés en fonction de la somme de la puissance moyenne de signal de bruit réduite et de la puissance moyenne de signal d'entrée.

**13.** Procédé selon l'une quelconque des revendications 10 à 12,
**caractérisé en ce que**
ledit signal d'essai est un signal périodique.

**14.** Procédé selon l'une quelconque des revendications précédentes,
**caractérisé en ce que**
lors de ladite étape (a), l'effet du bruit causé par le second signal est estimé en lissant le spectre de bruit pré-estimé.

**15.** Procédé selon la revendication 14,
**caractérisé en ce que**
ledit lissage du spectre de bruit pré-estimé est réalisé avec une réponse en fréquence combinée d'un égaliseur temporel et d'un égaliseur fréquentiel d'un appareil de traitement du signal (4) mettant en oeuvre ledit procédé.

**16.** Procédé selon la revendication 15,
**caractérisé en ce que**
ledit lissage est réalisé selon

$$(E_k^{ISDN})^2 = \frac{1}{L}\sum_{l=0}^{L-1}\left|X_{k,l}G_kH_k^{-1}\right|^2 = \left|G_k\right|^2\left|H_k^{-1}\right|^2 N_k^2$$

avec

$$N_k^2 = \frac{1}{L}\sum_{l=0}^{L-1}\left|X_{k,l}\right|^2 \text{,}$$

où $G_k$ et $H_k^{-1}$ sont les réponses en fréquence de l'égaliseur temporel et de l'égaliseur fréquentiel, respectivement, à une k$^{\text{ème}}$ tonalité, L est le nombre de symboles utilisés pour le lissage, $X_{k,l}$ est la composante fréquentielle du bruit à la k$^{\text{ème}}$ tonalité d'un l$^{\text{ème}}$ symbole, $N_k^2$ est le spectre de bruit pré-estimé, et $(E_k^{ISDN})^2$ est le spectre de bruit lissé.

**17.** Procédé selon l'une quelconque des revendications 14 à 16,
**caractérisé en ce que**
ledit lissage est réalisé alors qu'un signal d'essai est présent sur le canal de signalisation en tant que ledit premier signal.

**18.** Procédé selon la revendication 17,
**caractérisé en ce que**
ledit signal d'essai est un signal aléatoire.

**19.** Procédé selon l'une quelconque des revendications précédentes,
**caractérisé en ce que**
pour extraire les informations transmises avec le premier signal, le rapport signal/bruit du premier signal est déterminé en fonction de l'effet du bruit estimé lors de ladite étape (a).

**20.** Procédé selon la revendication 19 et l'une quelconque des revendications 14 à 18,
**caractérisé en ce que**
le rapport signal/bruit est déterminé en utilisant le spectre de bruit lissé.

**21.** Procédé selon la revendication 20,
**caractérisé en ce que**
le rapport signal/bruit est déterminé pour chaque tonalité de signal selon

$$S\hat{N}R_k = 10\log_{10}\left(\frac{S_k^2}{\hat{E}_k^2}\right) \quad \text{où} \quad \hat{E}_k^2 = E_k^2 + (E_k^{ISDN})^2 \,,$$

où $S\hat{N}R_k$ est le rapport signal/bruit pour une k$^{ème}$ tonalité du premier signal, $S_k^2$ est la puissance totale de signal à la k$^{ème}$ tonalité du premier signal, $E_k^2$ est la puissance de bruit mesurée à la k$^{ème}$ tonalité du premier signal, et $(E_k^{ISDN})^2$ est la puissance de bruit lissée et estimée à la k$^{ème}$ tonalité du premier signal.

**22.** Procédé selon l'une quelconque des revendications précédentes,
**caractérisé en ce que**
le procédé est mis en oeuvre dans un réseau de communication de telle sorte que le premier signal est un premier signal de communication, le second signal est un second signal de communication, et le canal de signalisation est un canal de communication du réseau de communication.

**23.** Procédé selon l'une quelconque des revendications précédentes,
**caractérisé en ce que**
le premier signal est un signal de données.

**24.** Procédé selon la revendication 23,
**caractérisé en ce que**
le premier signal est un signal DSL.

**25.** Procédé selon l'une quelconque des revendications précédentes,
**caractérisé en ce que**
le second signal est un signal vocal.

**26.** Procédé selon la revendication 25,
**caractérisé en ce que**
le second signal est un signal ISDN.

**27.** Appareil de traitement du signal pour extraire des informations transmises avec un signal sur un canal de signalisation,
ledit appareil de traitement du signal (4) comprenant :

un moyen d'estimation du bruit (5) pour estimer l'effet du bruit sur la mesure du rapport signal/bruit d'un premier signal transmis sur le canal de signalisation, le bruit étant causé par un second signal transmis dans une gamme de fréquences différente de celle dudit premier signal en même temps que le premier signal sur le même canal de signalisation, compte tenu d'un spectre de bruit pré-estimé préalablement déterminé et enregistré dans un état avec le bruit causé par le second signal présent sur le canal de signalisation, et
un moyen d'extraction d'informations (6) pour extraire les informations transmises avec le premier signal sur le canal de signalisation compte tenu du bruit estimé causé par le second signal, tel qu'estimé par le moyen d'estimation du bruit (5).

**28.** Appareil de traitement du signal selon la revendication 27,
**caractérisé en ce que**
ledit appareil de traitement du signal (4) est un appareil de communication utilisé dans un réseau de communication, le premier signal étant un premier signal de communication, le second signal étant un second signal de communication, et le canal de signalisation étant un canal de communication du réseau de communication.

**29.** Appareil de traitement du signal selon la revendication 28,
**caractérisé en ce que**
ledit appareil de traitement du signal (4) est un modem.

**30.** Appareil de traitement du signal selon l'une quelconque des revendications 27 à 29,
**caractérisé en ce que**
ledit appareil de traitement du signal (4) est conçu pour mettre en oeuvre le procédé selon l'une quelconque des revendications 1 à 26.

FIG 1

# FIG 2

| No ADSL signal present | |
|---|---|
| Estimate ISDN noise spectrum | ~100 |
| Compute average ISDN input signal power and set threshold for ISDN noise detection | ~110 |
| Detect presence of ISDN noise | ~200 |

Yes → 400

No ↓

| REVERB signal present | |
|---|---|
| Compute average ISDN input signal power | ~300 |
| Scale average ISDN input signal power and determine modem settings accordingly | ~310 |

| MEDLEY signal present | |
|---|---|
| Estimate ISDN noise spectrum | ~320 |
| Compute shaped ISDN noise spectrum | ~330 |
| Calculate SNR using shaped ISDN noise spectrum | ~340 |

# FIG 3

## FIG 4

## FIG 5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20020041565 A1
- WO 0213405 A2
- US 6205410 B1
- EP 1324557 A1
- US 20030026282 A